# EUROPÄISCHE PATENTSCHRIFT

(11) **EP 3 464 433 B1**
(45) Veröffentlichungstag und Bekanntmachung des Hinweises auf die Patenterteilung: **18.11.2020**
(21) Anmeldenummer: 17728499.9
(22) Anmeldetag: 01.06.2017
(51) Int. Cl.: C08J 9/00, C08J 9/12, C08J 9/16, C08L 67/04

(54) **VERFAHREN ZUR HERSTELLUNG VON EXPANDIERBAREN POLYMILCHSÄUREHALTIGEN GRANULATEN**
METHOD FOR MANUFACTURING EXPANDABLE GRANULATES CONTAINING POLYLACTIC ACIDS
PROCEDE DESTINE A LA FABRICATION DE GRANULES EXPANSIBLES CONTENANT DES POLY-ACIDES DE LAIT

(30) Priorität: 07.06.2016 EP 16173236
(43) Veröffentlichungstag der Anmeldung: 10.04.2019
(73) Patentinhaber: BASF SE, 67056 Ludwigshafen am Rhein (DE)
(72) Erfinder: SAMPATH, Bangaru Dharmapuri Sriramulu, 67056 Ludwigshafen (DE); LOHMANN, Jerome, 67056 Ludwigshafen (FR); GUTMANN, Peter, 67056 Ludwigshafen (DE)
(74) Vertreter: BASF IP Association
(86) Internationale Anmeldenummer: PCT/EP2017/063243
(87) Internationale Veröffentlichungsnummer: WO 2017/211660

(56) Entgegenhaltungen:
- EP-A1- 2 135 724
- WO-A2-2011/086030
- US-A1- 2013 345 327

## Beschreibung

Die Erfindung betrifft ein Verfahren zur Herstellung von expandierbaren Polymilchsäure-haltigen Granulaten, umfassend die Schritte:
a) Aufschmelzen und Einmischen der Komponenten:
   i) 65 bis 95 Gew.%, bezogen auf das Gesamtgewicht der Komponenten i bis iii, Polymilchsäure, wobei die Polymilchsäure anteilig aus: ia) 65 bis 95 Gew.-% Polymilchsäure mit einem D-Milchsäure-Anteil von 0,3 bis 5 % und ib) 5 bis 35 Gew.-% Polymilchsäure mit einem D-Milchsäure-Anteil von 10 bis 18% besteht;
   ii) 15 bis 35 Gew.%, bezogen auf das Gesamtgewicht der Komponenten i bis iii, eines aliphatischen Polyesters ausgewählt aus der Gruppe bestehend aus Polybutylensuccinat, Polybutylensuccinat-coadipats und Polybutylensuccinat-cosebacats;
   iii) 0 bis 2 Gew.%, bezogen auf das Gesamtgewicht der Komponenten i bis iii, eines Verträglichkeitsvermittlers;
   iv) 0,1 bis 5 Gew.-%, bezogen auf das Gesamtgewicht der Komponenten i bis iii, eines Additivs,
b) Einmischen
   v) 1 bis 7 Gew.-% bezogen auf das Gesamtgewicht der Komponenten i bis iv, eines organischen Treibmittels und
   vi) 0,01 bis 5 Gew.% eines Co-Treibmittels - ausgewählt aus der Gruppe Stickstoff, Kohlendioxid, Argon, Helium oder Mischungen davon - in die Polymerschmelze mittels eines statischen oder dynamischen Mischers bei einer Temperatur von mindestens 140°C,
c) Austrag durch eine Düsenplatte mit Bohrungen, deren Durchmesser am Düsenaustritt höchstens 1,5 mm beträgt und
d) Granulieren der treibmittelhaltigen Schmelze direkt hinter der Düsenplatte unter Wasser bei einem Druck im Bereich von 1 bis 21 bar.

Verfahren zur Herstellung von expandierbaren Polymilchsäure-haltigen Granulaten (Polymilchsäure-haltige Partikelschäume) sind in WO 2001/012706 und insbesondere WO 2011/086030 beschrieben. Die darin beschriebenen expandierbaren, treibmittelhaltigen, Polymilchsäure-haltigen Granulate können jedoch hinsichtlich ihrer Lagerstabilität nicht vollends überzeugen.

In der WO 2008/130226 und JP2007 169394 werden expandierte bzw. expandierbare Partikelschäume mit Dichten von 10 bis 100 g/l beschrieben, die bereits vorgeschäumt sind und mit Treibmittel nachimprägniert werden können. Bei derartigen Partikelschäumen spielt die Lagerstabilität keine so große Rolle, da sie zum Zeitpunkt des Transports zum Endverbraucher (Lagerzeitraum) kein oder nahezu kein Treibmittel enthalten.

Aufgabe der vorliegenden Erfindung war es, ein einfaches, prozessfähiges Verfahren zur Herstellung von expandierbaren, treibmittelhaltigen Polymilchsäure-haltigen Granulaten mit verbesserter Lagerstabilität bereitzustellen.

Demgemäß wurde das eingangs beschriebene Verfahren gefunden.

Im Folgenden wird das erfindungsgemäße Verfahren näher beschrieben.

Das Polymilchsäure-haltige Polymer, das in Stufe a) hergestellt wird, ist in der Regel eine Mischung aus:
i) 65 bis 95 Gew.-%, vorzugsweise 70 bis 79,9 Gew.-%, bezogen auf das Gesamtgewicht der Komponenten i bis iii, Polymilchsäure, wobei die Polymilchsäure anteilig aus ia) 65 bis 95 Gew.-%, vorzugsweise 80 bis 95 Gew.-%, Polymilchsäure mit einem D-Milchsäure-Anteil von 0,3 bis 5 % und ib) 5 bis 35 Gew.-%, vorzugsweise 5 bis 20 Gew.-%, Polymilchsäure mit einem D-Milchsäure-Anteil von 10 bis 18% besteht;
ii) 15 bis 35 Gew.-%, vorzugsweise 20 bis 29,9 Gew.-%, bezogen auf das Gesamtgewicht der Komponenten i bis iii, mindestens eines Polyesters ausgewählt aus der Gruppe bestehend aus Polybutylensuccinat, Polybutylensuccinat-coadipats und Polybutylensuccinat-cosebacats;
iii) 0 bis 2 Gew.-%, vorzugsweise 0,1 bis 1 Gew.-%, bezogen auf das Gesamtgewicht der Komponenten i bis iii, eines Verträglichkeitsvermittlers, vorzugsweise eines Peroxids oder eines Epoxidgruppen-haltigen Copolymers auf Basis Styrol, Acrylsäureester und/oder Methacrylsäureester, und
iv) 0 bis 5 Gew.-%, vorzugsweise 0,1 bis 1 Gew.-%, bezogen auf das Gesamtgewicht der Komponenten i bis iii, eines oder mehrerer Nukleierungsmittels, vorzugsweise Talkum.

Als Komponente i) wird Polymilchsäure als eine Mischung aus ia) 65 bis 95 Gew.-% einer semikristallinen Polymilchsäure mit einem D-Milchsäure-Anteil von 0,3 bis 5 % und ib) 5 bis 35 Gew.-% einer amorphen Polymilchsäure mit einem D-Milchsäure-Anteil von 10 bis 18% eingesetzt.

Vorzugsweise wird eine semikristalline Polymilchsäure mit dem folgenden Eigenschaftsprofil eingesetzt:
- einer Schmelzvolumenrate (MVR bei 190° C und 2.16 kg nach ISO 1133) von 0.5 bis 15 bevorzugt 1 bis 9, besonders bevorzugt 2 bis 8 ml/10 Minuten
- einem Schmelzpunkt unter 180° C;
- einem Glaspunkt (Tg) größer 40°C
- einem Wassergehalt von kleiner 1000 ppm
- einem Monomeren-Restgehalt (Lactid) von kleiner 0.3%.
- einem Molekulargewicht von größer 50 000 Dalton.

Bevorzugte Polymilchsäuren sind beispielsweise von NatureWorks das Ingeo® 2003 D, 4032 D, 4042 D und 4043 D, 3251 D, 3052 D und insbesondere 8051 D sowie 8052 D. Ingeo® 8051 D und 8052 D sind Polymilchsäuren der Fa. NatureWorks, mit den folgenden Produkteigenschaften: Tg: 65,3°C, Tm: 153,9°C, MVR: 6,9 [ml/10 Minuten], M_{w}:186000, Mn:107000 und einem D-Michsäureanteil von kleiner 5 %. Weiterhin weisen diese Produkte eine etwas höhere Säurezahl auf.

Amorphe Polymilchsäure weist einen Anteil an D-Milchsäure von größer 10, jedoch in der Regel nicht höher als 18 % auf. Eine besonders geeignete amorphe Polymilchsäure ist von NatureWorks unter dem Handelsnamen Ingeo® 4060 D mit einem D-Milchsäureanteil von 11 bis 13 % erhältlich. Andere Polymilchsäure Beispiele von NatureWorks sind das Ingeo 6302 D, 6362 D und 10361 D.

Als Komponente ii sind aliphatische Polyester ausgewählt aus der Gruppe bestehend aus Polybutylensuccinat, Polybutylensuccinat-coadipats und Polybutylensuccinat-cosebacats zu verstehen.

Die aliphatischen Polyester werden von den Firmen Showa Highpolymers unter dem Namen Bionolle und von Mitsubishi unter dem Namen GSPIa oder BioPBS vermarktet. Neuere Entwicklungen sind in der WO 2010/034711 beschrieben.

Die aliphatischen Polyester weisen in der Regel Viskositätszahlen nach DIN 53728 von 150 bis 320 cm³/g und vorzugsweise 150 bis 250 cm³/g auf.
Der MVR (Schmelzvolumenrate) nach EN ISO 1133 (190°C, 2,16 kg Gewicht) liegt im Allgemeinen bei 0,1 bis 70, bevorzugt bei 0,8 bis 70 und insbesondere bei 1 bis 60 cm³/10 min.
Die Säurezahlen nach DIN EN 12634 liegen im Allgemeinen bei 0,01 bis 3 mg KOH/g, vorzugsweise bei 0,01 bis 2,5 mg KOH/g.

Bevorzugt eingesetzte Polyester ii enthalten:
a) 80 bis 100 mol %, vorzugsweise 90 bis 99,5 mol %, bezogen auf die Komponenten a bis b, Bernsteinsäure;
b) 0 bis 20 mol%, vorzugsweise 0,5 bis 10 mol %, bezogen auf die Komponenten a bis b, Adipinsäure oder Sebazinsäure;
c) 85 bis 100 mol %, vorzugsweise 98 bis 100 mol %, bezogen auf die Komponenten a bis b, 1,3 Propandiol oder 1,4-Butandiol.
d) 0 bis 15 Gew.-%, vorzugsweise 0,1 bis 2 Gew.-%, bezogen auf das Gesamtgewicht der Komponenten a bis c, eines Kettenverlängerers und/oder Vernetzers ausgewählt aus der Gruppe bestehend aus: einem polyfunktionellen Isocyanat, wie vorzugsweise Hexamethylendiisocyanat; Isocyanurat; Oxazolin; Epoxid und/oder einem mindestens trifunktionellen Alkohols wie vorzugsweise Glycerin.

Der Verträglichkeitsvermittler iii) wird im Folgenden näher beschrieben.

Unter Peroxiden werden beispielsweise die von der Firma Akzo unter dem Markennamen Trigonox wie beispielweise Trigonox 301 vertriebene Produkte verstanden.

Unter Epoxiden wird insbesondere Epoxidgruppen-haltiges Copolymer auf Basis Styrol, Acrylsäureester und/oder Methacrylsäureester verstanden. Die Epoxidgruppen tragenden Einheiten sind vorzugsweise Glycidyl(meth)acrylate. Als vorteilhaft haben sich Copolymere mit einem Glycidylmethacrylat-Anteil von größer 20, besonders bevorzugt von größer 30 und insbesondere bevorzugt von größer 50 Gew.-% des Copolymers erwiesen. Das Epoxid-Äquivalentgewicht (EEW) in diesen Polymeren beträgt vorzugsweise 150 bis 3000 und insbesondere bevorzugt 200 bis 500 g/Äquivalent. Das mittlere Molekulargewicht (Gewichtsmittel) Mw der Polymere beträgt vorzugsweise 2000 bis 25.000, insbesondere 3000 bis 8.000. Das mittlere Molekulargewicht (Zahlenmittel) Mₙ der Polymere beträgt vorzugsweise 400 bis 6.000, insbesondere 1000 bis 4.000. Die Polydispersität (Q) liegt im Allgemeinen zwischen 1.5 und 5. Epoxidgruppen-haltige Copolymere des obengenannten Typs werden beispielsweise von der BASF Resins B.V. unter der Marke Joncryl® ADR vertrieben. Als Verträglichkeitsvermittler besonders geeignet ist Joncryl® ADR 4368 oder Joncryl ADR 4468C oder Joncryl ADR 4468HP.

Der Verträglichkeitsvermittler wird in 0 bis 2 Gew.-%, vorzugsweise 0,1 bis 1 Gew.-%, bezogen auf das Gesamtgewicht der Komponenten i bis iii) zugegeben.

Unter Komponente iv wird 0,01 bis 5 Gew.-% eines oder mehrere der folgenden Additive verstanden: Stabilisator, Nukleierungsmittel, Gleit- und Trennmittel, Tensid, Wachs, Antistatikum, Antifog-Mittel, Farbstoff, Pigment, UV-Absorber, UV-Stabilisator oder sonstigen Kunststoffadditiv. Insbesondere bevorzugt ist wie bereits erwähnt der Einsatz von 0,2 bis 1 Gew.-%, bezogen auf die Komponenten i und ii eines Nukleierungsmittels.

Unter Nukleierungsmittel wird insbesondere Talkum, Kreide, Ruß, Graphit, Calcium- oder Zinkstearat, Poly-D-Milchsäure, N,N'ethylen-bis-12-hydroxystearamid oder Polyglykolsäure verstanden: Besonders bevorzugt ist Talkum als Nukleierungsmittel.

Ruß, Kreide und Graphit können auch als Pigmente aufgefasst werden; sie können wie Eisenoxid und andere Farbpigmente dem Partikelschaum zugefügt werden, um eine gewünschte Farbe einzustellen. Eine Papierähnliches Aussehen kann vorteilhaft durch Zusatz von Sicoversal® erreicht werden, einem Farbbatch der Firma BASF Color Solutions umfassend Ruß, Eisenoxid und ein Gelbpigment. In der Regel werden die Pigmente iv-2 in einer Konzentration von 0,1 bis 1 Gew,-%, bezogen auf die Reaktionsmischung eingesetzt.

Die Komponente iv kann weitere, dem Fachmann bekannte, aber nicht erfindungswesentliche Inhaltsstoffe enthalten. Beispielsweise die in der Kunststofftechnik üblichen Zusatzstoffe wie Stabilisatoren; Gleit- und Trennmittel wie Stearate (insbesondere Calziumstearat); Weichmacher (Plastifizierer) wie beispielsweise Zitronensäureester (insbesondere Acetyl-tributylcitrat), Glycerinsäureester wie Triacetylglycerin oder Ethylenglykolderivate, Tenside wie Polysorbate, Palmitate oder Laurate; Wachse wie beispielsweise Bienenwachs oder Bienenwachsester; Antistatikum, UV-Absorbers; UV-Stabilisators; Antifog-Mittel oder Farbstoffe.

Das Treibmittel kann als weitere Komponente v aufgefasst werden.

Die treibmittelhaltige Polymerschmelze enthält in der Regel eine oder mehrere Treibmittel in homogener Verteilung in einem Anteil von insgesamt 2 bis 10 Gew.-% bevorzugt 3 bis 7 Gew.-%, bezogen auf die treibmittelhaltige Polymerschmelze. Als Treibmittel, eignen sich die üblicherweise in EPS eingesetzten physikalischen Treibmittel, wie aliphatische Kohlenwasserstoffe mit 2 bis 7 Kohlenstoffatomen, Alkohole, Ketone, Ether, Amide oder halogenierte Kohlenwasserstoffe. Bevorzugt wird iso-Butan, n-Butan, n-Pentan und insbesondere iso-Pentan eingesetzt. Weiterhin bevorzugt sind Gemische aus n-Pentan und iso-Pentan.

Die zugesetzte Treibmittelmenge wird so gewählt, dass die expandierbaren Granulate ein Expansionsvermögen α, definiert als Schüttdichte vor dem Vorschäumen von 500 bis 800 und vorzugsweise 580 bis 750 kg/m³ und eine Schüttdichte nach dem Vorschäumen höchstens von 125 bevorzugt 8 bis 100 kg/m³aufweisen.

Bei Verwendung von Füllstoffen können in Abhängigkeit von der Art und Menge des Füllstoffes Schüttdichten im Bereich von 590 bis 1200 kg/m³ auftreten.

Zur Herstellung der erfindungsgemäßen expandierbaren Granulate wird das Treibmittel in die Polymerschmelze eingemischt. Das Verfahren umfasst die Stufen A) Schmelzerzeugung, B) Mischen C) Fördern und D) Granulieren. Jede dieser Stufen kann durch die in der Kunststoffverarbeitung bekannten Apparate oder Apparatekombinationen ausgeführt werden. Zur Einmischung eignen sich statische oder dynamische Mischer, beispielsweise Extruder. Die Polymerschmelze kann direkt durch Aufschmelzen von Polymergranulaten erzeugt werden. Bei Bedarf kann die Schmelzetemperatur über einen Kühler abgesenkt werden. Für die Granulierung kommen beispielsweise die druckbeaufschlagte Unterwassergranulierung, Granulierung mit rotierenden Messern und Kühlung durch Sprühvernebelung von Temperierflüssigkeiten, in Betracht. Zur Durchführung des Verfahrens geeignete Apparateanordnungen sind z.B.:
i) Extruder - statischer Mischer - Kühler - Granulator
ii) Extruder - Granulator

Weiterhin kann die Anordnung einen Seitenextruder zur Einbringung von Additiven, z.B. von Feststoffen oder thermisch empfindlichen Zusatzstoffen aufweisen.

Die treibmittelhaltige Polymerschmelze wird in der Regel mit einer Temperatur im Bereich von 140 bis 300°C, bevorzugt im Bereich von 160 bis 270°C durch die Düsenplatte gefördert.

Um marktfähige Granulatgrößen zu erhalten sollte der Durchmesser (D) der Düsenbohrungen am Düsenaustritt im Bereich von 0,1 bis 2 mm, bevorzugt im Bereich von 0,1 bis 1,2 mm, besonders bevorzugt im Bereich von 0,1 bis 0,8 mm liegen. Damit lassen sich auch nach Strangaufweitung Granulatgrößen unter 2 mm, insbesondere im Bereich 0,2 bis 1,4 mm gezielt einstellen.

Die Strangaufweitung kann außer über die Molekulargewichtsverteilung durch die Düsengeometrie beeinflusst werden. Die Düsenplatte weist bevorzugt Bohrungen mit einem Verhältnis L/D von mindestens 2 auf, wobei die Länge (L) den Düsenbereich, dessen Durchmesser höchstens dem Durchmesser (D) am Düsenaustritt entspricht, bezeichnet. Bevorzugt liegt das Verhältnis L/D im Bereich von 3 - 20.

Im Allgemeinen sollte der Durchmesser (E) der Bohrungen am Düseneintritt der Düsenplatte mindestens doppelt so groß wie der Durchmesser (D) am Düsenaustritt sein. Eine Ausführungsform der Düsenplatte weist Bohrungen mit konischem Einlauf und einem Einlaufwinkel α kleiner 180°, bevorzugt im Bereich von 30 bis 120° auf. In einer weiteren Ausführungsform besitzt die Düsenplatte Bohrungen mit konischem Auslauf und einen Auslaufwinkel β kleiner 90°, bevorzugt im Bereich von 15 bis 45°. Um gezielte Granulatgrößenverteilungen der Polymeren zu erzeugen kann die Düsenplatte mit Bohrungen unterschiedlicher Austrittsdurchmesser (D) ausgerüstet werden. Die verschiedenen Ausführungsformen der Düsengeometrie können auch miteinander kombiniert werden.

In der Regel weisen die Granulate einen mittleren Durchmesser im Bereich von 0,1 bis 2 mm und 50 bis 300 Hohlräume/mm² Querschnittsfläche auf. Durch die Absenkung der Temperatur bei der Unterwassergranulierung kann die Schüttdichte der auf den Bereich von 580 bis 750 kg/m³und vorzugsweise 580 bis 720kg/m³ verringert werden. Weiterhin weisen die so hergestellten expandierbaren Polymilchsäure-haltigen Granulate eine erhöhte Lagerstabilität auf. Die erhöhten Lagerstabilitäten der erfindungsgemäß hergestellten Granulate sind insbesondere a) auf das Verfahren der Vornukleierung durch die Verwendung einer Kombination aus organischem Treibmittel v und Co-Treibmittel vi und b) auf die Verwendung einer Mischung aus semikristalliner und amorpher Komponente i in den angegebenen, engen Mischungsverhältnissen zurückzuführen. Sie können noch nach Wochen problemlos aufgeschäumt werden.

Durch die Verwendung von flüchtigen, flüssigen / gasförmigen Hohlräume bildende Co-Treibmittel vi) eine zelluläre Struktur in den expandierbaren Granulaten eingestellt werden kann, mit deren Hilfe der späteren Schäumvorgang verbessert und die Zellgröße kontrolliert werden kann.

Das Verfahren zur Einstellung dieser Hohlraum-Morphologie kann auch als Vornukleierung bezeichnet werden, wobei die Hohlräume im Wesentlichen durch das Co-Treibmittel vi) gebildet werden.

Das die Hohlräume bildende Co-Treibmittel vi) unterscheidet sich vom eigentlichen Treibmittel v in dessen Löslichkeit im Polymeren. Bei der Herstellung werden zunächst Treibmittel v) und Co-Treibmittel vi) im Polymeren bei ausreichend hohem Druck vollständig gelöst. Anschließend wird der Druck reduziert, vorzugsweise innerhalb kurzer Zeit, und somit die Löslichkeit des Co-Treibmittel vi) reduziert. Dadurch stellt sich eine Phasenseparation in der polymeren Matrix ein und eine vornukleierte Struktur entsteht. Das eigentliche Treibmittel v) bleibt aufgrund dessen höherer Löslichkeit und / oder dessen geringer Diffusionsgeschwindigkeit überwiegend im Polymeren gelöst. Simultan zur Druckreduzierung wird vorzugsweise eine Temperaturreduktion durchgeführt, um eine zu starke Nukleierung des Systems zu verhindern und ein Ausdiffundieren des eigentlichen Treibmittels v) zu verringern. Erreicht wird dies durch Co-Treibmittel vi) in Verbindung mit optimalen Granulierbedingungen.

Bevorzugt entweicht das Co-Treibmittel vi) zu mindestens 80 Gew.-% innerhalb von 24 h aus den expandierbaren thermoplastischen Partikeln bei einer Lagerung bei 25°C, Normaldruck und 50% relativer Feuchtigkeit. Die Löslichkeit des Co-Treibmittels vi) in den expandierbaren thermoplastischen Partikeln liegt bevorzugt unter 0,1 Gew.-% In allen Fällen sollte die zugegebene Menge des eingesetzten Co-Treibmittels vi) bei der Vornukleierung die maximale Löslichkeit bei den vorliegenden Prozessbedingungen überschreiten. Daher werden bevorzugt Co-Treibmittel vi) eingesetzt, die eine geringe, aber ausreichende Löslichkeit im Polymeren aufweisen. Dazu zählen insbesondere Gase wie Stickstoff, Kohlendioxid, Luft oder Edelgase, besonders bevorzugt Stickstoff, dessen Löslichkeit in vielen Polymeren sich bei niedrigen Temperaturen und Drücken verringert. Es sind aber auch andere flüssige Additive vorstellbar.

Besonders bevorzugt werden inerte Gase wie Stickstoff und Kohlendioxid eingesetzt. Beide Gase zeichnen sich neben ihren geeigneten physikalischen Eigenschaften durch geringe Kosten, gute Verfügbarkeit, einfache Handhabbarkeit und reaktionsträges bzw. inertes Verhaltes aus. Beispielsweise findet in Gegenwart der beiden Gase in nahezu allen Fällen keine Degradation des Polymeren statt. Da die Gase selbst aus der Atmosphäre gewonnen werden, besitzen sie zudem ein umweltneutrales Verhalten.

Die eingesetzte Menge des Co-Treibmittel vi) sollte dabei: (a) hinreichend klein sein, um sich bei den gegebenen Schmelzetemperaturen und -drücken bei der Schmelzeimprägnierung bis zur Granulierung zu lösen; (b) ausreichend hoch sein, um sich beim Granulierwasserdruck und der Granuliertemperatur aus dem Polymer zu entmischen und nukleieren. In einer bevorzugten Ausführungsform ist mindestens eines der verwendeten Treibmittel bei Raumtemperatur und unter Normaldruck gasförmig.

Besonders bevorzugt wird Talkum als Nukleierungsmittel iv) in Kombination mit Stickstoff als Co-Treibmittel vi) eingesetzt.

Für den Transport und die Lagerung der expandierbaren Granulate kommen unter anderem Metallfässer und Oktabins zum Einsatz. Beim Einsatz von Fässern ist zu beachten, dass sich durch die Freisetzung der Co-Treibmittel vi) ggf. Druck im Fass aufbauen kann. Als Packmittel sind daher vorzugsweise offene Gebinde wie Oktabins oder Fässer zu verwenden, die einen Druckabbau durch Permeation des Gases aus dem Fass ermöglichen. Besonders bevorzugt sind dabei Fässer, die ein Ausdiffundieren des Co-Treibmittels vi) ermöglichen und eine Ausdiffundieren des eigentlichen Treibmittels v) minimieren bzw. verhindern. Dies kann beispielsweise durch die Abstimmung des Dichtungswerkstoffs auf das Treibmittel bzw. Co-Treibmittel vi) ermöglicht werden. Vorzugsweise ist die Permeabilität des Dichtungsmaterials für das Co-Treibmittel vi) um mindestens einen Faktor 20 höher als die Permeabilität des Dichtungsmaterials für das Treibmittel v)

Durch die Vornukleierung, beispielsweise durch Zugabe geringer Mengen an Stickstoff und/oder Kohlendioxid, kann im expandierbaren, treibmittelhaltigen Granulat eine zelluläre Morphologie eingestellt werden. Die mittlere Zellgröße im Zentrum der Partikel ist kann dabei größer als in den Randbereichen, die Dichte ist in den Randbereichen der Partikel höher sein. Dadurch werden Treibmittelverluste soweit wie möglich minimiert.

Durch die Vornukleierung ist eine deutliche bessere Zellgrößenverteilung und einer Reduzierung der Zellgröße nach dem Vorschäumen erzielbar. Zudem ist die benötigte Menge an Treibmittel zum Erreichen einer minimalen Schüttdichte geringer und die Lagerstabilität des Materials verbessert. Geringe Mengen Stickstoff oder Kohlendioxid bei Zugabe in die Schmelze können zu einer deutlichen Verkürzung der Vorschäumzeiten bei konstantem Treibmittelgehalt bzw. zu einer deutlichen Reduzierung der Treibmittelmengen bei gleichbleibenden Schäumzeiten und minimalen Schaumdichten führen. Zudem werden durch die Vornukleierung die Produkthomogenität und die Prozessstabilität verbessert.

Eine erneute Imprägnierung der erfindungsgemäßen Polymergranulate mit Treibmitteln ist des Weiteren deutlich schneller möglich als bei Granulaten mit identischer Zusammensetzung und kompakter, d. h. nichtzellulärer Struktur. Einerseits sind die Diffusionszeiten geringer, andererseits benötigt man analog zu direkt imprägnierten Systemen geringere Treibmittelmengen für das Schäumen.

Schließlich kann durch die Vornukleierung der Treibmittelgehalt, der zur Erzielung einer gewissen Dichte erforderlich ist, reduziert und damit die Entformzeiten bei der Formteil- bzw. Blockherstellung verringert werden. Somit können die Weiterverarbeitungskosten reduziert und die Produktqualität verbessert werden.

Das Prinzip der Vornukleierung kann sowohl für die Suspension-Technologie als auch für die Schmelzeimprägnierungstechnologie zur Herstellung von expandierbaren Partikel genutzt werden. Bevorzugt wird die Anwendung im Schmelzeextrusionsverfahren, bei dem die Zugabe der Co-Treibmittel vi) durch die druckunterstützte Unterwassergranulierung nach Austritt der treibmittelbeladenen Schmelze granuliert wird. Durch Wahl der Granulierparameter und des Co-Treibmittel vi) kann die Mikrostruktur des Granulats wie oben beschrieben gesteuert werden.

Bei höheren Mengen an Co-Treibmittel vi), beispielsweise im Bereich von 1 bis 5 Gew.-% bezogen auf die treibmittelhaltige Polymerschmelze, ist eine Erniedrigung der Schmelzetemperatur oder der Schmelzeviskosität und damit eine deutliche Durchsatzerhöhung möglich. Damit ist auch eine schonende Einarbeitung thermolabiler Zusatzstoffe, beispielsweise Flammschutzmittel, zur Polymerschmelze möglich. Die Zusammensetzung der expandierbaren thermoplastischen Partikel wird dadurch nicht verändert, da das Co-Treibmittel bei der Schmelzeextrusion im Wesentlichen entweicht. Zur Ausnutzung dieses Effektes wird bevorzugt CO₂ eingesetzt. Bei N₂ sind die Effekte auf die Viskosität geringer. Stickstoff wird daher vorwiegend zur Einstellung der gewünschten Zellstruktur eingesetzt.
Die flüssigkeitsgefüllte Kammer zur Granulierung der expandierbaren thermoplastischen Polymerpartikel wird bevorzugt bei einer Temperatur im Bereich von 20 bis 80°C, besonders bevorzugt im Bereich von 30 bis 60°C betrieben.

Um den thermischen Abbau der Polymilchsäure so gering wie möglich zu halten, ist es ferner zweckmäßig, den mechanischen und thermischen Energieeintrag in allen Verfahrensstufen so gering wie möglich zu halten. Die mittleren Scherraten im Schneckenkanal sollten gering sein, bevorzugt werden Scherraten unter 250/sec, bevorzugt unter 100/sec, und Temperaturen unter 270°C sowie kurze Verweilzeiten im Bereich von 2 bis 10 Minuten in den Stufen c) und d) eingehalten. Die Verweilzeiten liegen ohne Kühlschritt in der Regel bei 1,5 bis 4 Minuten und wenn ein Kühlschritt vorgesehen ist in der Regel bei 5 bis 10 Minuten. Die Polymerschmelze kann durch Druckpumpen, z. B. Zahnradpumpen gefördert und ausgetragen werden.

Zur Verbesserung der Verarbeitbarkeit können die fertigen expandierbaren Granulate durch Glycerinester, Antistatika oder Antiverklebungsmittel beschichten werden.

Die erfindungsgemäßen expandierbaren Granulate weisen eine geringere Verklebung gegenüber Granulaten, die niedermolekulare Weichmacher enthalten, auf und zeichnen sich durch einen geringen Pentanverlust während der Lagerung auf.
Die erfindungsgemäßen expandierbaren Granulate können in einem ersten Schritt mittels Heißluft oder Wasserdampf zu Schaumpartikeln mit einer Dichte im Bereich von 8 bis 100 kg/m³vorgeschäumt und in einem 2. Schritt in einer geschlossenen Form zu Partikelformteilen verschweißt werden.

Die mit dem erfindungsgemäßen Verfahren hergestellten Granulate weisen eine hohe biologische Abbaubarkeit bei gleichzeitig guten Eigenschaften beim Verschäumen auf. Im Sinne der vorliegenden Erfindung ist das Merkmal "biologisch abbaubar" für einen Stoff oder ein Stoffgemisch dann erfüllt, wenn dieser Stoff oder das Stoffgemisch entsprechend DIN EN 13432 einen prozentualen Grad des biologischen Abbaus von mindestens 90% aufweist.

Im Allgemeinen führt die biologische Abbaubarkeit dazu, dass die Granulate bzw. daraus hergestellte Schäume in einer angemessenen und nachweisbaren Zeitspanne zerfallen. Der Abbau kann enzymatisch, hydrolytisch, oxidativ und/oder durch Einwirkung elektromagnetischer Strahlung, beispielsweise UV-Strahlung, erfolgen und meist zum überwiegenden Teil durch die Einwirkung von Mikroorganismen wie Bakterien, Hefen, Pilzen und Algen bewirkt werden. Die biologische Abbaubarkeit lässt sich beispielsweise dadurch quantifizieren, dass Polyester mit Kompost gemischt und für eine bestimmte Zeit gelagert werden. Beispielsweise lässt man gemäß DIN EN 13432 CO₂-freie Luft durch gereiften Kompost während des Kompostierens strömen. Der Kompost wird einem definierten Temperaturprogramm unterworfen. Hierbei wird die biologische Abbaubarkeit über das Verhältnis der Netto-CO₂-Freisetzung der Probe (nach Abzug der CO₂-Freisetzung durch den Kompost ohne Probe) zur maximalen CO₂-Freisetzung der Probe (berechnet aus dem Kohlenstoffgehalt der Probe) als prozentualer Grad des biologischen Abbaus definiert. Biologisch abbaubare Granulate zeigen in der Regel schon nach wenigen Tagen der Kompostierung deutliche Abbauerscheinungen wie Pilzbewuchs, Riss- und Lochbildung.

Andere Methoden zur Bestimmung der Bioabbaubarkeit werden beispielsweise in ASTM D 5338 und ASTM D 6400-4 beschrieben.

### Beispiele

Eingesetzte Materialien:
Komponente i:
   i-1a: aliphatischer Polyester, Polylactid Natureworks® 8052 D der Fa. NatureWorks mit einem D Milchsäure Anteil von 4,5%
   i-1b: aliphatischer Polyester, Polylactid Natureworks® 4060 D der Fa. NatureWorks mit einem D Milchsäure Anteil von 12%
Komponente ii:
   ii-1: aliphatischer Polyester, Polybutylenesuccinat GSPIa FZ91PD der Fa. MCC
Komponente iii:
   iii-1: Joncryl® ADR 44688 C der Fa. BASF SE
Komponente iv:
   iv-1: HP 325 Chinatalk Luzenac
   iv-2: Farbmasterbatch (25 %-ig mit Ruß, Eisenoxyd und Monoazo Gelb-Pigment als Additiv und aliphatischer Polyester ii-1 als Träger) Sicoversal® der Firma BASF Color solutions
Komponente v:
   v-1: Treibmittel: iso-Pentan
Komponenete vi:
   vi-1: Co-Treibmittel: Stickstoff (N₂)

### Vergleichsbeispiel 1: (ohne Komponente i-1b)

6,7 Anteile iso-Pentan (Komponente v-1) und 0,12 Anteile Stickstoff (vi-1) wurden in eine Schmelze aus 75 Anteile Komponente i-1a, 25 Anteile Komponente ii-1, 0,2 Anteile Komponente iii-1 und 0,3 Anteile Komponente iv-1 bei einer Schmelztemperatur von 200-240°C eingemischt.
Die Schmelze wurde mit einem Durchsatz von 70 kg/h durch eine Düsenplatte mit 50 Bohrungen (Durchmesser 0,65 mm) und einer Temperatur von 260°C gefördert. Mit Hilfe einer druckbeaufschlagten und temperierten Unterwassergranulierung (20 bar - 40°C) wurden vornukleierte Granulate mit enger Granulat Größenverteilung hergestellt.

Die Granulate wurden für eine bestimmte Zeit bei Raumtemperatur oder bei 37°C gelagert und danach durch Einwirkung von strömendem Wasserdampf wurden die Granulate vorgeschäumt und in einem 2. Schritt in einer geschlossenen Form zu Partikelformteilen verschweißt.
An den Formteilen wurden die Biegefestigkeit und die Biegearbeit nach DIN-EN 12089 bestimmt

### Beispiel 2: (mit 10 % Komponente i-1b)

6,7 Anteile iso-Pentan (Komponente v-1) und 0,12 Anteile Stickstoff (vi-1) wurden in eine Schmelze aus 65 Anteile Komponente i-1a, 10 Anteile Komponente i-1b, 25 Anteile Komponente ii-1, 0,2 Anteile Komponente iii-1 und 0,3 Anteile Komponente iv-1 bei einer Schmelztemperatur von 200-240°C eingemischt.
Die Schmelze wurde mit einem Durchsatz von 70 kg/h durch eine mit 50 Bohrungen (Durchmesser 0,65 mm) und einer Temperatur von 260°C gefördert. Mit Hilfe einer druckbeaufschlagten und temperierten Unterwassergranulierung (20 bar - 40°C) wurden vornukleierte Granulate mit enger Granulat Größenverteilung hergestellt.

Die Granulate wurden für eine bestimmte Zeit bei Raumtemperatur oder bei 37°C gelagert und danach durch Einwirkung von strömendem Wasserdampf wurden die Granulate vorgeschäumt und in einem 2. Schritt in einer geschlossenen Form zu Partikelformteilen verschweißt.
An den Formteilen wurden die Biegefestigkeit und die Biegearbeit nach DIN-EN 12089 bestimmt

### Vergleichsbeispiel 3: (ohne Komponente i-1b, ohne Komponente ii-1)

6,7 Anteile iso-Pentan (Komponente v-1) und 0,12 Anteile Stickstoff (vi-1) wurden in eine Schmelze aus 100 Anteile Komponente i-1a, 0,2 Anteile Komponente iii-1 und 0,3 Anteile Komponente iv-1 bei einer Schmelztemperatur von 200-240°C eingemischt.
Die Schmelze wurde mit einem Durchsatz von 70 kg/h durch eine mit 50 Bohrungen (Durchmesser 0,65 mm) und einer Temperatur von 260°C gefördert. Mit Hilfe einer druckbeaufschlagten und temperierten Unterwassergranulierung (20 bar - 40°C) wurden vornukleierte Granulate mit enger Granulat Größenverteilung hergestellt.

Die Granulate wurden für eine bestimmte Zeit bei Raumtemperatur oder bei 37°C gelagert und danach durch Einwirkung von strömendem Wasserdampf wurden die Granulate vorgeschäumt.

### Vergleichsbeispiel 4: (ohne Komponente ii-1)

6,7 Anteile iso-Pentan (Komponente v-1) und 0,12 Anteile Stickstoff (vi-1) wurden in eine Schmelze aus 90 Anteile Komponente i-1a, 10 Anteile i-1b, 0,2 Anteile Komponente iii-1 und 0,3 Anteile Komponente iv-1 bei einer Schmelztemperatur von 200-240°C eingemischt.
Die Schmelze wurde mit einem Durchsatz von 70 kg/h durch eine mit 50 Bohrungen (Durchmesser 0,65 mm) und einer Temperatur von 260°C gefördert. Mit Hilfe einer druckbeaufschlagten und temperierten Unterwassergranulierung (20 bar - 40°C) wurden vornukleierte Granulate mit enger Granulat Größenverteilung hergestellt.

Die Granulate wurden für eine bestimmte Zeit bei Raumtemperatur oder bei 37°C gelagert und danach durch Einwirkung von strömendem Wasserdampf wurden die Granulate vorgeschäumt.

### Vergleichsbeispiel 5: (ohne Komponente i-1b und Komponente vi-1)

6,7 Anteile iso-Pentan (Komponente v-1) wurden in eine Schmelze aus 90 Anteile Komponente i-1a, 10 Anteil i-1b, 0,2 Anteile Komponente iii-1 und 0,3 Anteile Komponente iv-1 bei einer Schmelztemperatur von 200-240°C eingemischt.
Die Schmelze wurde mit einem Durchsatz von 70 kg/h durch eine mit 50 Bohrungen (Durchmesser 0,65 mm) und einer Temperatur von 260°C gefördert. Mit Hilfe einer druckbeaufschlagten und temperierten Unterwassergranulierung (20 bar - 40°C) wurden vornukleierte Granulate mit enger Granulat Größenverteilung hergestellt.

### Beispiel 6: (mit Farbmasterbatch)

6,2 Anteile iso-Pentan (Komponente v-1) und 0,12 Anteile Stickstoff (vi-1) wurden in eine Schmelze aus 69,4 Anteile Komponente i-1a, 5 Anteile Komponente i-1b, 24,9 Anteile Komponente ii-1, 0,2 Anteile Komponente iii-1, 0,4 Anteile Komponente iv-1 und 0,3 Anteile Komponente iv-2 bei einer Schmelztemperatur von 200-240°C eingemischt.
Die Schmelze wurde mit einem Durchsatz von 70 kg/h durch eine mit 50 Bohrungen (Durchmesser 0,65 mm) und einer Temperatur von 260°C gefördert. Mit Hilfe einer druckbeaufschlagten und temperierten Unterwassergranulierung (20 bar - 40°C) wurden vornukleierte Granulate mit enger Granulat Größenverteilung hergestellt.

Die Granulate wurden für eine bestimmte Zeit bei Raumtemperatur oder bei 37°C gelagert und danach durch Einwirkung von strömendem Wasserdampf wurden die Granulate vorgeschäumt.

### Beispiel 7: (mit Farbmasterbatch)

6,2 Anteile iso-Pentan (Komponente v-1) und 0,12 Anteile Stickstoff (vi-1) wurden in eine Schmelze aus 69,4 Anteile Komponente i-1a, 5 Anteile Komponente i-1b, 24,1 Anteile Komponente ii-1, 0,2 Anteile Komponente iii-1, 1,2 Anteile Komponente iv-1 und 0,3 Anteile Komponente iv-2 bei einer Schmelztemperatur von 200-240°C eingemischt.
Die Schmelze wurde mit einem Durchsatz von 70 kg/h durch eine mit 50 Bohrungen (Durchmesser 0,65 mm) und einer Temperatur von 260°C gefördert. Mit Hilfe einer druckbeaufschlagten und temperierten Unterwassergranulierung (20 bar - 40°C) wurden vornukleierte Granulate mit enger Granulat Größenverteilung hergestellt.

Die Granulate wurden für eine bestimmte Zeit bei Raumtemperatur oder bei 37°C gelagert und danach durch Einwirkung von strömendem Wasserdampf wurden die Granulate vorgeschäumt.

### Beispiel 8: (mit Farbmasterbatch)

6,2 Anteile iso-Pentan (Komponente v-1) und 0,12 Anteile Stickstoff (vi-1) wurden in eine Schmelze aus 69,4 Anteile Komponente i-1a, 5 Anteile Komponente i-1b, 23,3 Anteile Komponente ii-1, 0,2 Anteile Komponente iii-1, 2 Anteile Komponente iv-1 und 0,3 Anteile Komponente iv-2 bei einer Schmelztemperatur von 200-240°C eingemischt. Die Schmelze wurde mit einem Durchsatz von 70 kg/h durch eine mit 50 Bohrungen (Durchmesser 0,65 mm) und einer Temperatur von 260°C gefördert. Mit Hilfe einer druckbeaufschlagten und temperierten Unterwassergranulierung (20 bar - 40°C) wurden vornukleierte Granulate mit enger Granulat Größenverteilung hergestellt.

Die Granulate wurden für eine bestimmte Zeit bei Raumtemperatur oder bei 37°C gelagert und danach durch Einwirkung von strömendem Wasserdampf wurden die Granulate vorgeschäumt.

### Beispiel 9: (mit Farbmasterbatch)

6,2 Anteile iso-Pentan (Komponente v-1) und 0,12 Anteile Stickstoff (vi-1) wurden in eine Schmelze aus 69,4 Anteile Komponente i-1a, 5 Anteile Komponente i-1b, 21,3 Anteile Komponente ii-1, 0,2 Anteile Komponente iii-1, 4 Anteile Komponente iv-1 und 0,3 Anteile Komponente iv-2 bei einer Schmelztemperatur von 200-240°C eingemischt. Die Schmelze wurde mit einem Durchsatz von 70 kg/h durch eine mit 50 Bohrungen (Durchmesser 0,65 mm) und einer Temperatur von 260°C gefördert. Mit Hilfe einer druckbeaufschlagten und temperierten Unterwassergranulierung (20 bar - 40°C) wurden vornukleierte Granulate mit enger Granulat Größenverteilung hergestellt.

Die Granulate wurden für eine bestimmte Zeit bei Raumtemperatur oder bei 37°C gelagert und danach durch Einwirkung von strömendem Wasserdampf wurden die Granulate vorgeschäumt.

| | V-Bsp-1 | Bsp-2 | V-Bsp-3 | V-Bsp-4 | V-Bsp-5 |
|---|---|---|---|---|---|
| Komponente i-1a | 75 | 65 | 100 | 90 | 90 |
| Komponente i-1b | 0 | 10 | 0 | 10 | 10 |
| Komponente ii-1 | 25 | 25 | 0 | 0 | 0 |
| Komponente iii-1 | 0,2 | 0,2 | 0,2 | 0,2 | 0,2 |
| Komponente iv-1 | 0,3 | 0,3 | 0,3 | 0,3 | 0,3 |
| Komponente v-1 | 6,7 | 6,7 | 6,7 | 6,7 | 6,7 |
| Komponente vi-1 | 0,12 | 0,12 | 0,12 | 0,12 | 0 |
| Durchsatz (kg/h) | 70 | 70 | 70 | 70 | 70 |
| Düsenplatte Temperatur (°C) | 260 | 260 | 260 | 260 | 260 |
| Druck Unterwassergranulierung (bar) | 20 | 20 | 20 | 20 | 20 |
| Temperatur Unterwassergranulierung (°C) | 40 | 40 | 40 | 40 | 40 |

| | V-Bsp-1 | Bsp-2 | V-Bsp-3 | V-Bsp-4 | V-Bsp-5 |
|---|---|---|---|---|---|
| Min. Schüttdichte Schaum nach Produktion (kg/m³) | 26,4 | 24,1 | 21,4 | 22,0 | NA |
| Min. Schüttdichte Schaum nach 7 Tage Lagerung bei Raumtemperatur (kg/m³) | 26,2 | 24,4 | 21,9 | 22,4 | NA |
| Min. Schüttdichte Schaum nach 14 Tage Lagerung bei Raumtemperatur (kg/m³) | 26,6 | 24,1 | 21,8 | 22,3 | NA |
| Min. Schüttdichte Schaum nach 7 Tage Lagerung bei 37°C (kg/m³) | 51,5 | 27,7 | 410 | 87 | NA |
| Min. Schüttdichte Schaum nach 14 Tage Lagerung bei 37°C (kg/m³) | 111,0 | 60,0 | 560 | 302 | NA |
| Biegearbeit nach DIN-EN12089 (J/(kg/m³)) nach 14 Tage Lagerung bei Raumtemperatur | 0,06 | 0,14 | - | - | - |

| | | | | | |
|---|---|---|---|---|---|
| *NA: schäumt nicht* | | | | | |

Mit dem in WO 08/130226 beschriebenen Verfahren (siehe V-Bsp-5 ohne Vornukleierung und ohne die erfindungsgemäße Komponente ii) gelangt man nicht zu treibmittelhaltigen, expandierbaren Granulaten. Das deutlich verbesserte Verfahren gemäß WO 11/086030 (siehe V-Bsp-1) liefert treibmittelhaltige, expandierbare Granulate, die bei Raumtemperatur bereits über 2 Wochen lagerstabil sind, jedoch bei höheren Temperaturen, wie sie beim Transport durchaus kurzfristig vorkommen können, sind die Ergebnisse weniger zufriedenstellend. Wie Bsp-2 zeigt liefert das erfindungsgemäße Verfahren treibmittelhaltige, expandierbare Granulate, die auch bei höherer Temperatur lagerstabil sind.
Außerdem zeigt das Produkt aus dem Beispiel 2 bessere mechanischen Eigenschaften im Vergleich zum Beispiel 1.

## Patentansprüche

1. Verfahren zur Herstellung von expandierbaren Polymilchsäure-haltigen Granulaten, umfassend die Schritte:
a) Aufschmelzen und Einmischen der Komponenten:
i) 65 bis 95 Gew.%, bezogen auf das Gesamtgewicht der Komponenten i bis iii, Polymilchsäure, wobei die Polymilchsäure anteilig aus: ia) 65 bis 95 Gew.-% Polymilchsäure mit einem D-Milchsäure-Anteil von 0,3 bis 5 % und ib) 5 bis 35 Gew.-% Polymilchsäure mit einem D-Milchsäure-Anteil von 10 bis 18% besteht;
ii) 5 bis 35 Gew.%, bezogen auf das Gesamtgewicht der Komponenten i bis iii, eines aliphatischen Polyesters ausgewählt aus der Gruppe bestehend aus Polybutylensuccinat, Polybutylensuccinat-coadipats und Polybutylensuccinat-cosebacats;
iii) 0 bis 2 Gew.%, bezogen auf das Gesamtgewicht der Komponenten i bis iii, eines Verträglichkeitsvermittlers; und
iv) 0,1 bis 5 Gew.-%, bezogen auf das Gesamtgewicht der Komponenten i bis iii, eines Additivs,
b) Einmischen
v) 1 bis 7 Gew.-%, bezogen auf das Gesamtgewicht der Komponenten i bis iv, eines organischen Treibmittels und
vi) 0,01 bis 5 Gew.-% eines Co-Treibmittels - ausgewählt aus der Gruppe Stickstoff, Kohlendioxid, Argon, Helium oder Mischungen davon - in die Polymerschmelze mittels eines statischen oder dynamischen Mischers bei einer Temperatur von mindestens 140°C,
c) Austrag durch eine Düsenplatte mit Bohrungen, deren Durchmesser am Düsenaustritt höchstens 1,5 mm beträgt und
d) Granulieren der treibmittelhaltigen Schmelze direkt hinter der Düsenplatte unter Wasser bei einem Druck im Bereich von 1 bis 21 bar.

2. Verfahren nach Anspruch 1, **dadurch gekennzeichnet, dass** die Unterwassergranulierung bei 20 bis 80 °C durchgeführt wird.

3. Verfahren nach den Ansprüchen 1 oder 2, **dadurch gekennzeichnet, dass** als organisches Treibmittel in Stufe b) iso-Pentan eingesetzt wird.

4. Verfahren nach den Ansprüchen 1 bis 3, **dadurch gekennzeichnet, dass** der Schmelze in Stufe a) ein Farbmasterbatch enthaltend Eisenoxid, Ruß und ein organischsn Gelbpigment zugesetzt wird.

## Claims

1. A process for the preparation of expandable polylactic-acid-containing pellets, comprising the steps of:
a) Melting and incorporation by mixing of the following components:
i) from 65 to 95% by weight, based on the total weight of components i to iii, of polylactic acid, where the polylactic acid consists of: ia) from 65 to 95% by weight of polylactic acid with content of from 0.3 to 5% of D-lactic acid and ib) from 5 to 35% by weight of polylactic acid with content of from 10 to 18% of D-lactic acid;
ii) from 5 to 35% by weight, based on the total weight of components i to iii, of an aliphatic polyester selected from the group consisting of polybutylene succinate, polybutylene succinate-co-adipate and polybutylene succinate-co-sebacate;
iii) from 0 to 2% by weight, based on the total weight of components i to iii, of a compatibilizer; and
iv) from 0.1 to 5% by weight, based on the total weight of components i to iii, of an additive,
b) incorporation by mixing of
v) from 1 to 7% by weight, based on the total weight of components i to iv, of an organic blowing agent and
vi) from 0.01 to 5% by weight of a co-blowing agent - selected from the group of nitrogen, carbon dioxide, argon, helium and mixtures thereof - into the polymer melt by means of a static or dynamic mixer at a temperature of at least 140°C,
c) discharge through a die plate with perforations, the diameter of which at the die outlet is at most 1.5 mm, and
d) underwater pelletization of the blowing-agent-containing melt directly downstream of the die plate at a pressure in the range from 1 to 21 bar.

2. The process according to claim 1, wherein the underwater pelletization is carried out at from 20 to 80°C.

3. The process according to claim 1 or 2, wherein isopentane is used as organic blowing agent in stage b).

4. The process according to claims 1 to 3, wherein in stage a) a color masterbatch comprising iron oxide, carbon black and an organic yellow pigment is added to the melt.

## Revendications

1. Procédé pour la préparation de granulés expansibles contenant un poly(acide lactique), comprenant les étapes de :
a) fusion et mélange des composants :
i) 65 à 95 % en poids, par rapport au poids total des composants i à iii, de poly(acide lactique), le poly(acide lactique) étant constitué proportionnellement de : ia) 65 à 95 % en poids de poly(acide lactique) doté d'une proportion en acide D-lactique de 0,3 à 5 % et ib) 5 à 35 % en poids de poly(acide lactique) doté d'une proportion en acide D-lactique de 10 à 18 % ;
ii) 5 à 35 % en poids, par rapport au poids total des composants i à iii, d'un polyester aliphatique choisi dans le groupe constitué par un poly(succinate de butylène), un poly(succinate de butylène)-coadipate et un poly(succinate de butylène)-cosébaçate ;
iii) 0 à 2 % en poids, par rapport au poids total des composants i à iii, d'un agent de compatibilisation ; et
iv) 0,1 à 5 % en poids, par rapport au poids total des composants i à iii, d'un additif,
b) mélange de
v) 1 à 7 % en poids, par rapport au poids total des composants i à iv, d'un propulseur organique et
vi) 0,01 à 5 % en poids d'un co-propulseur - choisi dans le groupe de l'azote, du dioxyde de carbone, de l'argon, de l'hélium et des mélanges correspondants -
dans la masse fondue de polymère au moyen d'un mélangeur statique ou dynamique à une température d'au moins 140 °C,
c) évacuation par une plaque de buse dotée de trous dont le diamètre à la sortie de buse est d'au plus 1,5 mm et
d) granulation de la masse fondue contenant un propulseur directement derrière la plaque de buse sous l'eau à une pression dans la plage de 1 à 21 bars.

2. Procédé selon la revendication 1, **caractérisé en ce que** la granulation sous l'eau est mise en œuvre à une température de 20 à 80 °C.

3. Procédé selon la revendication 1 ou 2, **caractérisé en ce qu'**en tant que propulseur organique dans l'étape b), de l'isopentane est utilisé.

4. Procédé selon les revendications 1 à 3, **caractérisé en ce qu'**un mélange maître de colorant contenant de l'oxyde de fer, une suie et un pigment jaune organique est ajouté à la masse fondue dans l'étape a).
